# EUROPEAN PATENT APPLICATION

(11) **EP 4 647 628 A1**
(43) Date of publication of application: **12.11.2025**
(21) Application number: 23947280.6
(22) Date of filing: 11.10.2023
(51) Int. Cl.: F16D 27/09

(54) **ELECTROMAGNETIC CLUTCH, ELECTROMAGNETIC CLUTCH ASSEMBLY, POWER DEVICE AND VEHICLE**

(30) Priority: 31.07.2023 CN 202310956615; 31.07.2023 CN 202322043382 U
(71) Applicant: Guangzhou Automobile Group Co., Ltd., Guangzhou, Guangdong 511434 (CN)
(72) Inventor: LI, Jia, Guangzhou, Guangdong 511434 (CN); SHI, Xinglei, Guangzhou, Guangdong 511434 (CN); LING, Xiaoming, Guangzhou, Guangdong 511434 (CN); YU, Zilin, Guangzhou, Guangdong 511434 (CN); XIE, Xumiao, Guangzhou, Guangdong 511434 (CN)
(74) Representative: Metida
(86) International application number: PCT/CN2023/123883
(87) International publication number: WO 2025/025341

(57) **Abstract**

An electromagnetic clutch, an electromagnetic clutch assembly, a power device, and a vehicle are provided. The electromagnetic clutch (10) includes a connecting member (1), a sliding sleeve (2), and an excitation member (3). The sliding sleeve (2) is slidably connected to the connecting member (1), and the excitation member (3) is arranged on an outer side of the sliding sleeve (2). The excitation member (3) can generate electromagnetic induction with the sliding sleeve (2) and drive the sliding sleeve (2) to move, so that the sliding sleeve (2) can be connected to a first transmission member (20) or a second transmission member (30), thereby forming different gear positions. Moreover, the structure is simple, thereby enabling the vehicle to output a wider range of speeds.

## Description

### CROSS-REFERENCE TO RELATED APPLICATIONS

This application claims priority to Chinese Patent Application No. 202310956615.0, filed with the China National Intellectual Property Administration on July 31, 2023, entitled "ELECTROMAGNETIC CLUTCH, ELECTROMAGNETIC CLUTCH ASSEMBLY, POWER DEVICE, AND VEHICLE" and Chinese Patent Application No. 202322043382.3, filed with the China National Intellectual Property Administration on July 31, 2023, entitled "ELECTROMAGNETIC CLUTCH, ELECTROMAGNETIC CLUTCH ASSEMBLY, POWER DEVICE, AND VEHICLE", the entire contents of which are incorporated herein by reference.

### FIELD OF TECHNOLOGY

The present invention relates to the field of vehicles, and mainly to an electromagnetic clutch, an electromagnetic clutch assembly, a power device, and a vehicle.

### BACKGROUND

In the power device of an automobile, a gear shifting device, namely a synchronizer, is typically provided to switch between different gear positions. By means of the synchronizer, the power device can output power at different gear positions. However, in the power device equipped with a synchronizer, additional components such as a shift fork, a linear bearing, a synchronizer ring, and a hydraulic system are required to actuate the synchronizer, thereby making the power device more complex.

### SUMMARY

In view of the above shortcomings in the prior art, an objective of the present invention is to provide an electromagnetic clutch, an electromagnetic clutch assembly, a power device, and a vehicle. A plurality of gear positions can be automatically switched to output a wider range of vehicle speeds, and the structure is simpler.

To achieve the above objective, the present invention adopts the following technical solutions:
An electromagnetic clutch, including: a connecting member; a sliding sleeve, slidably connected to a circumferential outer side of the connecting member and axially movable relative to the connecting member, where two axial ends of the sliding sleeve are each provided with clamping structures, the clamping structures located at the two ends of the sliding sleeve are connectable to different transmission members respectively, and the sliding sleeve is of an integral structure; and an excitation member, arranged on a circumferential outer side of the sliding sleeve and capable of generating electromagnetic induction with the sliding sleeve and driving the sliding sleeve to move axially, so that the sliding sleeve is connected to the different transmission members.

In some embodiments of the present application, the electromagnetic clutch further includes: elastic reset elements, arranged in an axial direction of the connecting member, where one end of each of the elastic reset elements is connected to the connecting member, and the other end of the elastic reset element is connected to the sliding sleeve to drive the sliding sleeve to disengage from the transmission members.

In some embodiments of the present application, positioning grooves are formed in an inner wall surface of the sliding sleeve; and the electromagnetic clutch further includes: auxiliary elastic return elements, arranged on the connecting member and abutting against the inner wall surface of the sliding sleeve, where the auxiliary elastic return elements snap into the positioning grooves when the sliding sleeve is disengaged from the transmission members.

In some embodiments of the present application, the connecting member includes a toothed hub, where a circumferential outer surface of the toothed hub is provided with spring mounting grooves, and the spring mounting grooves are formed in a radial direction of the toothed hub; and each of the auxiliary elastic return elements includes a first spring and a ball, where the first spring is arranged in each of the spring mounting grooves, the ball is located between the first spring and the sliding sleeve, and the ball abuts against the sliding sleeve.

In some embodiments of the present application, the connecting member further includes two pressure plates fixed at two axial ends of the toothed hub respectively; and protruding portions are arranged on the inner wall surface of the sliding sleeve and are located between the two pressure plates, and the elastic reset element is elastically connected between each of the protruding portions and each of the two pressure plates.

In some embodiments of the present application, the two axial ends of the toothed hub are each provided with a pressure plate mounting groove and clearance grooves, where the diameter of the pressure plate mounting groove is smaller than the diameter of the toothed hub, one end of each of the clearance grooves is in communication with the pressure plate mounting groove, and the other end of the clearance groove is in communication with the circumferential outer surface of the toothed hub; each of the pressure plates includes a fixing ring and a connecting protrusion, where the fixing ring is interference-fitted into the pressure plate mounting groove, one end of the connecting protrusion is connected to a circumferential outer side of the fixing ring, and the other end of the connecting protrusion passes through the clearance groove and extends to a circumferential outer side of the toothed hub; and one end of each of the elastic reset elements away from each of the protruding portions abuts against the connecting protrusion.

In some embodiments of the present application, the circumferential outer surface of the toothed hub is provided with elastic reset element mounting grooves, the elastic reset element mounting grooves are in communication with the clearance grooves formed in the two ends of the toothed hub, and the elastic reset elements and the protruding portions are located in the elastic reset element mounting grooves; the circumferential outer surface of the toothed hub is provided with spline grooves, a length direction of each of the spline grooves is set in an axial direction of the toothed hub, the inner wall surface of the sliding sleeve is provided with spline teeth, and the spline teeth are in sliding fit with the spline grooves; the plurality of spline grooves, the plurality of connecting protrusions, and the plurality of auxiliary elastic return elements are all arranged at intervals in a circumferential direction of the toothed hub; and any two of the spline grooves, the connecting protrusions, or the auxiliary elastic return elements are arranged in a staggered manner.

In some embodiments of the present application, the spline grooves are in communication with two axial end surfaces of the toothed hub; each of the clamping structures includes a first clamping tooth and a second clamping tooth, where the first clamping tooth is arranged at a first end of the sliding sleeve and is capable of fitting with the transmission member close to the first end of the sliding sleeve; and the second clamping tooth is arranged at a second end of the sliding sleeve and is capable of fitting with the transmission member close to the second end of the sliding sleeve, and the first clamping tooth and the second clamping tooth are arranged on a same straight line as each of the spline teeth.

In some embodiments of the present application, the excitation member includes a coil with a current of 2 A to 2.5 A.

In some embodiments of the present application, the current of the coil is 2.2 A to 2.5 A.

In some embodiments of the present application, the coil includes a first coil and a second coil, where the first coil is arranged on an outer side of a first end of the sliding sleeve and is capable of generating electromagnetic induction with the sliding sleeve to drive the sliding sleeve to move in a first direction, the second coil is arranged on an outer side of a second end of the sliding sleeve and is capable of generating electromagnetic induction with the sliding sleeve to drive the sliding sleeve to move in a second direction, and the first direction is opposite to the second direction.

In some embodiments of the present application, the first coil and the second coil are symmetrically arranged; the excitation member further includes a first housing, a first end cover, a second housing, and a second end cover, where the first housing is arranged on the outer side of the first end of the sliding sleeve, a first coil mounting groove is formed in an axial end surface of the first housing, the first coil is fixed in the first coil mounting groove, the first end cover is fixed to the first housing and abuts against the first coil, the inner diameter of the first end cover is smaller than the outer diameter of the first end of the sliding sleeve, and a first gap is formed between an end part of the first end of the sliding sleeve and the first end cover; the first housing is arranged on the outer side of the first end of the sliding sleeve, a second coil mounting groove is formed in an axial end surface of the second housing, the second coil is fixed in the second coil mounting groove, the second end cover is fixed to the second housing and abuts against the second coil, the inner diameter of the second end cover is smaller than the outer diameter of the second end of the sliding sleeve, and a second gap is formed between an end part of the second end of the sliding sleeve and the second end cover; and the first housing is fixedly connected to the second housing, the first end cover is arranged at one end of the first housing facing away from the second housing, and the second end cover is arranged at one end of the second housing facing away from the first housing.

In some embodiments of the present application, the sliding sleeve is a steel part or an iron part.

An electromagnetic clutch assembly, including: the electromagnetic clutch; a first transmission member, arranged on one axial side of the connecting member, where first connecting structures are arranged on the first transmission member, and the clamping structures are capable of snapping into the first connecting structures; and a second transmission member, arranged on one side of the connecting member away from the first transmission member, where second connecting structures are arranged on the second transmission member, and the clamping structures are capable of snapping into the second connecting structures.

In some embodiments of the present application, the first connecting structures and the second connecting structures are both clamping grooves.

In some embodiments of the present application, limiting strips are arranged on the inner wall surface of the sliding sleeve, an end part of a first end of each of the limiting strips is capable of abutting against the first transmission member, and an end part of a second end of the limiting strip is capable of abutting against the second transmission member.

In some embodiments of the present application, the electromagnetic clutch assembly further includes: a main shaft, fixedly connected to the connecting member, where the first transmission member and the second transmission member are both rotatably connected to the main shaft.

A power device, including the electromagnetic clutch assembly, where the electromagnetic clutch assembly is capable of driving the sliding sleeve to be in transmission connection with the first transmission member via the clamping structures, or the electromagnetic clutch assembly is capable of driving the sliding sleeve to be in transmission connection with the second transmission member via the clamping structures, and a transmission ratio between the first transmission member and the sliding sleeve is different from a transmission ratio between the second transmission member and the sliding sleeve.

A vehicle, including a vehicle body, wheels, and the power device, where the power device is fixedly connected to the vehicle body, and the wheels are in transmission connection with the power device.

The beneficial effects are as follows: the electromagnetic clutch in this application includes a connecting member, a sliding sleeve, and an excitation member. The sliding sleeve is slidably connected to the connecting member, and the excitation member is arranged on an outer side of the sliding sleeve. The excitation member can generate electromagnetic induction with the sliding sleeve and drive the sliding sleeve to move, so that the sliding sleeve can be connected to different transmission members, thereby forming different gear positions. Moreover, the structure is simple.

The electromagnetic clutch assembly in this application includes the electromagnetic clutch, a first transmission member, and a second transmission member. Under the drive of the excitation member, the sliding sleeve can be connected to the first transmission member or to the second transmission member, thereby achieving switching between different gear positions.

The power device in this application includes the electromagnetic clutch assembly. The electromagnetic clutch assembly is controlled to achieve switching between different gear positions, thereby outputting a wider range of vehicle speeds.

The vehicle in this application includes a vehicle body, wheels, and the power device, where the power device is mounted on the vehicle body, and the wheels are in transmission connection with the power device. The power device can switch a plurality of gear positions to output a wider range of vehicle speeds.

### BRIEF DESCRIPTION OF THE DRAWINGS

FIG. 1 is a schematic diagram of a sectional structure of an electromagnetic clutch in an embodiment of the present application;
FIG. 2 is a schematic diagram of a sectional structure of an electromagnetic clutch assembly in an embodiment of the present application;
FIG. 3 is a schematic diagram of a sectional structure of an electromagnetic clutch assembly in another embodiment of the present application;
FIG. 4 is a schematic structural diagram of a sliding sleeve;
FIG. 5 is a schematic structural diagram of a toothed hub;
FIG. 6 is a schematic structural diagram of a pressure plate;
FIG. 7 is a schematic structural diagram of an auxiliary elastic return element; and
FIG. 8 is a schematic structural diagram of a first housing.

Description of reference signs of main components: 1-connecting member; 11-toothed hub; 111-pressure plate mounting groove; 112-clearance groove; 113-elastic reset element mounting groove; 114-spline groove; 115-spring mounting groove; 12-pressure plate; 121-fixing ring; 122-connecting protrusion; 2-sliding sleeve; 21-clamping structure; 211-first clamping tooth; 212-second clamping tooth; 22-positioning groove; 23-protruding portion; 24-spline tooth; 25-limiting strip; 3-excitation member; 31-first coil assembly; 32-second coil assembly; 311-first housing; 312-first coil; 313-first end cover; 314-first coil mounting groove; 315-first gap; 321-second housing; 322-second coil; 323-second end cover; 324-second gap; 4-elastic reset element; 5-auxiliary elastic return element; 51-first spring; 52-ball; 100-electromagnetic clutch assembly; 10-electromagnetic clutch; 20-first transmission member; 201-first connecting structure; 30-second transmission member; 301-second connecting structure; and 40-main shaft.

### DESCRIPTION OF THE EMBODIMENTS

The present invention provides an electromagnetic clutch, an electromagnetic clutch assembly, a power device, and a vehicle. In order to make the objective, technical solutions and effects of the present invention clearer and more definite, the present invention will be further described in detail below with reference to the accompanying drawings and embodiments. It should be understood that the specific embodiments described herein are only for explaining the present invention and are not intended to limit the scope of protection of the present invention.

In the description of the present invention, it is to be understood that the terms "upper", "lower", "inner", "outer", and the like indicate orientations or positional relationships based on the orientations or positional relationships shown in the accompanying drawings, merely for the convenience of describing the present invention and simplifying the description, rather than indicating or implying that the device or element referred to must have a particular orientation or be constructed and operated in a particular orientation, and therefore cannot be understood as limitations to the present invention.

In the description of the present invention, it is to be noted that the terms "mount", "connected", and "connection" should be understood in a broad sense, unless otherwise expressly specified and limited. For example, it may be a fixed connection, a detachable connection, or an integral connection; it may be a mechanical connection, an electrical connection, or a mutual communication; and it may be being directly connected, being indirectly connected via an intermediate medium, a communication between the interiors of two elements, or an interaction between two elements. Those of ordinary skill in the art can understand specific meanings of the above terms in the present invention according to specific circumstances.

A vehicle includes a vehicle body, wheels, and a power device, where the power device is fixed to the vehicle body, and the wheels are in transmission connection with an output end of the power device. The wheels are driven to rotate by the power device, enabling the vehicle to move.

### Embodiment 1:

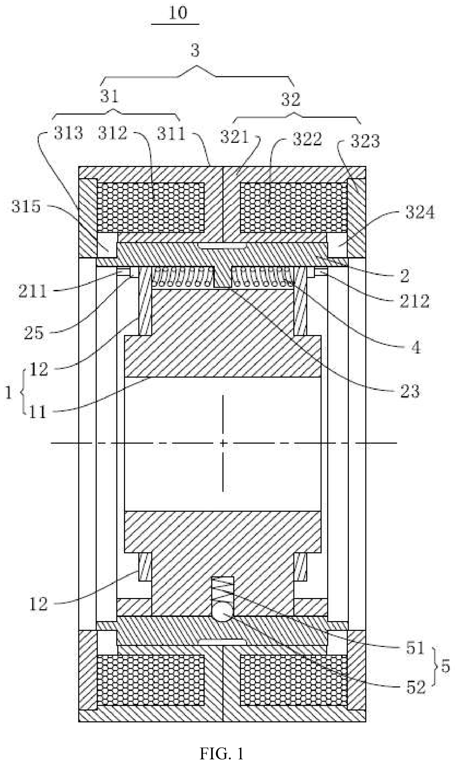

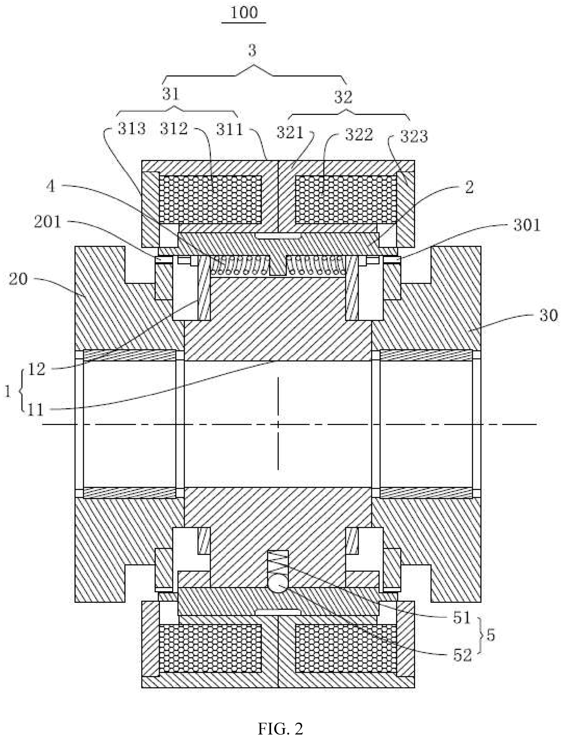

Referring to FIG. 1 and FIG. 2, the power device includes an electromagnetic clutch 10, a first transmission member 20, and a second transmission member 30. The first transmission member 20 and the second transmission member 30 are different transmission members of the power device. The electromagnetic clutch 10 can be connected to the first transmission member 20 to form a "first gear", and the electromagnetic clutch 10 can also be connected to the second transmission member 30 to form a "second gear". The electromagnetic clutch 10 cannot be connected to both the first transmission member 20 and the second transmission member 30 at the same time, that is, when the electromagnetic clutch 10 is connected to the first transmission member 20, the electromagnetic clutch 10 is disengaged from the second transmission member 30, and when the electromagnetic clutch 10 is connected to the second transmission member 30, the electromagnetic clutch 10 is disengaged from the first transmission member 20, so that the power device transmits power through either the first transmission member 20 or the second transmission member 30.

The electromagnetic clutch 10 includes a connecting member 1, a sliding sleeve 2, and an excitation member 3, where the connecting member 1, the sliding sleeve 2, and the excitation member 3 are coaxially arranged, the first transmission member 20 and the second transmission member 30 are arranged on two axial sides of the sliding sleeve 2 respectively, that is, the first transmission member 20 is arranged on an outer side of a first end of the sliding sleeve 2, and the second transmission member 30 is arranged on an outer side of a second end of the sliding sleeve 2. The connecting member 1 is configured to be connected to a power input mechanism of the power device and is slidably connected to the sliding sleeve 2. The sliding sleeve 2 is slidably connected to a circumferential outer side of the connecting member 1 and can move axially relative to the connecting member 1. When the power input mechanism drives the connecting member 1 to rotate, the sliding sleeve 2 can be driven to rotate. The excitation member 3 is arranged on a circumferential outer side of the sliding sleeve 2, and the sliding sleeve 2 can generate electromagnetic induction with the excitation member 3. When the excitation member 3 is energized, a magnetic field can be generated, thereby causing the sliding sleeve 2 to move under the action of the magnetic field generated by the excitation member 3. When the excitation member is de-energized, the magnetic field disappears.

The sliding sleeve 2 is of an integral structure, making the production of the sliding sleeve 2 and the assembly of the electromagnetic clutch 10 more convenient, and making the structure more compact.

In the above, the power input mechanism may be one or more of a motor or an engine. That is to say, the electromagnetic clutch 10 can be applied to hybrid power devices, pure electric power devices, and engine-driven power devices. Further, the vehicle may be a hybrid vehicle, a pure electric vehicle, or a fuel vehicle.

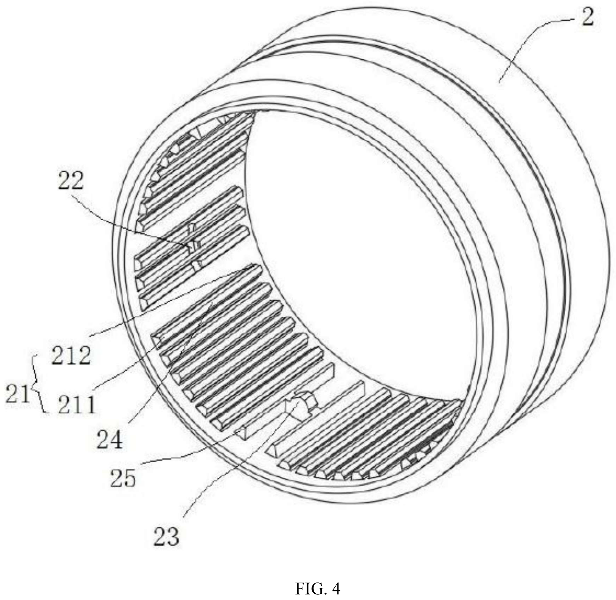

Referring to FIG. 1 and FIG. 4, two axial ends of the sliding sleeve 2 are each provided with clamping structures 21, so that when the magnetic field generated by the excitation member 3 generates electromagnetic induction with the sliding sleeve 2 and drives the sliding sleeve 2 to move axially, the sliding sleeve 2 is connected to the first transmission member 20 or the second transmission member 30 via the clamping structures 21, thereby enabling the power of the power input mechanism to be transmitted through the connecting member 1, the sliding sleeve 2, and the first transmission member 20, or through the connecting member 1, the sliding sleeve 2, and the second transmission member 30. A transmission ratio between the first transmission member 20 and the sliding sleeve 2 is different from a transmission ratio between the second transmission member 30 and the sliding sleeve 2, so that the power device can output two different vehicle speeds, increasing a speed range at the output end of the power device, that is, allowing the vehicle to output a wider range of speeds.

In other embodiments, the first transmission member 20 and the second transmission member 30 are configured to be connected to the power input mechanism of the power device, and the connecting member 1 is configured to output the power, that is, the power of the power input mechanism is transmitted through the first transmission member 20, the sliding sleeve 2, and the connecting member 1, or through the second transmission member 30, the sliding sleeve 2, and the connecting member 1.

The position of the excitation member 3 is fixed, the sliding sleeve 2 can rotate relative to the excitation member 3 and can move in an axial direction of the excitation member 3, while the connecting member 1 can rotate relative to the excitation member 3 but cannot move relative to the excitation member 3. The sliding sleeve 2 is capable of magnetic conduction, so when the excitation member 3 is energized to generate a magnetic field, the sliding sleeve 2 moves under the action of the magnetic field generated by the excitation member 3, thereby enabling the sliding sleeve 2 to be connected to the first transmission member 20 to form a "first gear", or enabling the sliding sleeve 2 to be connected to the second transmission member 30 to form a "second gear".

For example, when the sliding sleeve 2 is connected to the first transmission member 20, the output speed is low and the torque is high. When the vehicle starts, the electromagnetic clutch 10 is controlled to switch to a state where the sliding sleeve 2 is connected to the first transmission member 20, thereby outputting a greater torque. That is, the vehicle has a greater starting power. When the vehicle speed is greater than a preset speed threshold, the electromagnetic clutch 10 is controlled to switch to a state where the sliding sleeve 2 is connected to the second transmission member 30. When the sliding sleeve 2 is connected to the second transmission member 30, the output speed is high and the torque is low, thereby outputting a higher speed. That is, the vehicle has a higher speed.

In the above, the sliding sleeve 2 can generate electromagnetic induction with the excitation member 3, that is, the sliding sleeve 2 is an armature of an electromagnetic induction structure, so there is no need to additionally provide the armature, making the structure of the electromagnetic clutch 10 simpler and more compact, and reducing costs. Moreover, the sliding sleeve 2 is driven to move by the excitation member 3 so as to achieve gear shifting. Compared with a conventional synchronizer, there is no need to provide a shift fork, a linear bearing, a synchronizer ring, a hydraulic system, and other components for actuating the synchronizer, resulting in smaller size, lower weight, and lower cost.

In an embodiment, the sliding sleeve 2 is an iron part, which is capable of magnetic conduction, so that the sliding sleeve 2 can generate electromagnetic induction with the excitation member 3. Since the sliding sleeve 2 made of iron may cause magnetic leakage, a current of a coil in the excitation member 3 can be increased to ensure that a magnetic attraction force can drive the sliding sleeve 2 to move.

In an embodiment, the sliding sleeve 2 is a steel part, which is capable of magnetic conduction, so that the sliding sleeve 2 can generate electromagnetic induction with the excitation member 3. Moreover, the strength of the steel part is superior to that of the iron part, thereby ensuring the service life of the sliding sleeve 2. To prevent insufficient magnetic force caused by magnetic leakage of the sliding sleeve 2, the current of the coil in the excitation member 3 can be increased to ensure that the magnetic attraction force can drive the sliding sleeve 2 to move.

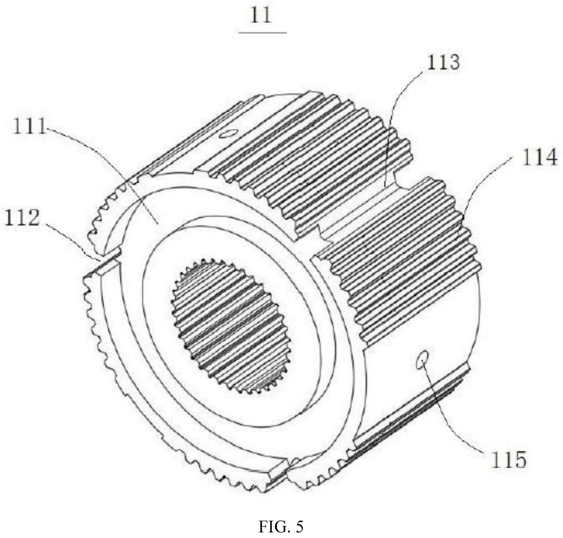

Referring to FIG. 1 and FIG. 5, in an embodiment, the connecting member 1 includes a toothed hub 11, where the toothed hub 11 is slidably connected to the sliding sleeve 2. A circumferential outer surface of the toothed hub 11 is provided with spline grooves 114, a length direction of the spline groove 114 is set in an axial direction of the toothed hub 11, an inner wall surface of the sliding sleeve 2 is provided with spline teeth 24, and the spline teeth 24 fit with the spline grooves 114 to achieve a sliding connection between the toothed hub 11 and the sliding sleeve 2, namely a sliding connection between the connecting member 1 and the sliding sleeve 2.

The clamping structure 21 includes a first clamping tooth 211 and a second clamping tooth 212, where the first clamping tooth is arranged at the first end of the sliding sleeve, and the second clamping tooth is arranged at the second end of the sliding sleeve. First connecting structures 201 are arranged on the first transmission member 20. When the sliding sleeve 2 moves toward one side of the first transmission member 20, the first clamping teeth 211 can fit with the first connecting structures 201 to achieve a connection between the sliding sleeve 2 and the first transmission member 20. Similarly, second connecting structures 301 are arranged on the second transmission member 30. When the sliding sleeve 2 moves toward one side of the second transmission member 30, the second clamping teeth 212 can fit with the second connecting structures 301 to achieve a connection between the sliding sleeve 2 and the second transmission member 30.

In the embodiment shown in FIG. 1, both the first connecting structures 201 and the second connecting structures 301 are clamping grooves that can snap into the clamping structures 21. The first connecting structures 201 are arranged on a circumferential outer surface of one end of the first transmission member 20 close to the sliding sleeve 2, and the second connecting structures 301 are arranged on a circumferential outer surface of one end of the second transmission member 30 close to the sliding sleeve 2.

In the embodiment shown in FIG. 1, the first clamping teeth 211 and the second clamping teeth 212 are arranged on a same straight line as the spline teeth 24, that is, both the first clamping teeth 211 and the second clamping teeth 212 are both arranged on the inner wall surface of the sliding sleeve 2 and form a whole with the spline teeth 24, making the sliding sleeve 2 simpler in structure and convenient to manufacture. In other words, the first clamping teeth 211 and the second clamping teeth 212 are part of the spline teeth 24, that is, the spline teeth 24 can fit with the spline grooves 114 and also can fit with the first connecting structures 201 and the second connecting structures 301. In other embodiments, the first clamping teeth 211 and the second clamping teeth 212 may be arranged on end surfaces of the sliding sleeve 2 respectively.

The electromagnetic clutch 10 further includes elastic reset elements 4, where the elastic reset elements 4 are arranged in an axial direction of the connecting member 1. One end of the elastic reset element 4 is connected to the connecting member 1, and the other end of the elastic reset element is connected to the sliding sleeve 2. When the excitation member 3 is in a de-energized state, the elastic reset elements 4 can push the sliding sleeve 2 to return to the position between the "first gear" and the "second gear". When the sliding sleeve 2 is located in the position between the "first gear" and the "second gear", the sliding sleeve 2 is not connected to neither the first transmission member 20 nor the second transmission member 30, so that the power cannot be transmitted between the sliding sleeve 2 and the first transmission member 20, and between the sliding sleeve 2 and the second transmission member 30, thereby forming a "neutral gear".

In the above, the elastic reset element 4 may be one or more of a compression spring or a disc spring.

Referring to FIG. 1, in an embodiment, the connecting member 1 further includes two pressure plates 12 fixed at two axial ends of the toothed hub 11 respectively. Protruding portions 23 are arranged on the inner wall surface of the sliding sleeve 2 and are located between the two pressure plates 12, and the elastic reset element 4 is elastically connected between each of the protruding portions 23 and each of the two pressure plates 12. One end of the elastic reset element 4 is connected to the protruding portion 23, and the other end of the elastic reset element is connected to the pressure plate 12, so that the elastic reset element 4 can push the sliding sleeve 2 to move, thereby achieving reset of the sliding sleeve 2.

In the embodiment shown in FIG. 1, the protruding portions 23 are arranged in the middle of the sliding sleeve 2 in an axial direction, and the elastic reset element 4 is arranged between each of the two pressure plates 12 and each of the protruding portions 23. When the sliding sleeve 2 moves from the "neutral gear" position to the "first gear" position, the elastic reset elements 4 close to the first transmission member 20 are elastically compressed to store energy. When the excitation member 3 is de-energized, the sliding sleeve 2 loses the magnetic force of electromagnetic induction, and the elastic reset elements 4 release energy to push the sliding sleeve 2 from the "first gear" position to the "neutral gear" position, thereby achieving reset of the sliding sleeve 2. Similarly, when the sliding sleeve 2 moves from the "neutral gear" position to the "second gear" position, the elastic reset elements 4 close to the second transmission member 30 are elastically compressed to store energy. When the excitation member 3 is de-energized, the sliding sleeve 2 loses the magnetic force of electromagnetic induction, and the elastic reset elements 4 release energy to push the sliding sleeve 2 from the "second gear" position to the "neutral gear" position, thereby achieving reset of the sliding sleeve 2.

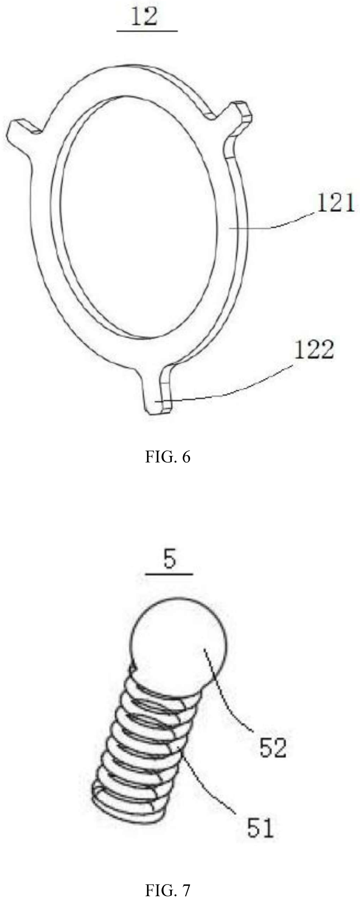

Referring to FIG. 1, FIG. 5, and FIG. 6, detailedly, the two axial ends of the toothed hub 11 are each provided with a pressure plate mounting groove 111 and clearance grooves 112, where the diameter of the pressure plate mounting groove 111 is smaller than the diameter of the toothed hub 11, one end of the clearance groove 112 is in communication with the pressure plate mounting groove 111, and the other end of the clearance groove is in communication with the circumferential outer surface of the toothed hub 11. The pressure plate 12 includes a fixing ring 121 and a connecting protrusion 122, where the fixing ring 121 is mounted in the pressure plate mounting groove 111, one end of the connecting protrusion 122 is connected to a circumferential outer side of the fixing ring 121, and the other end of the connecting protrusion passes through the clearance groove 112 and extends to a circumferential outer side of the toothed hub 11, thereby forming a connecting position configured to be connected to the elastic reset element 4; and one end of the elastic reset element 4 away from the protruding portion 23 abuts against the connecting protrusion 122, thereby achieving a connection between the elastic reset element 4 and the connecting member 1.

The circumferential outer surface of the toothed hub 11 is provided with elastic reset element mounting grooves 113, the elastic reset element mounting grooves 113 are in communication with the clearance grooves 112 formed in the two ends of the toothed hub 11, and the elastic reset elements 4 and the protruding portions 23 are located in the elastic reset element mounting grooves 113, so that there is no need to design positions for mounting the elastic reset elements 4 between the inner wall surface of the sliding sleeve 2 and the circumferential outer surface of the toothed hub 11, making the structure more compact.

In the above, the elastic reset elements 4 are symmetrically arranged in the axial direction of the connecting member 1. The plurality of elastic reset elements 4 are distributed in a circumferential direction of the toothed hub 11, so that when the elastic reset elements 4 push the sliding sleeve 2 to move, the sliding sleeve 2 is subjected to a more balanced force and moves more smoothly.

In an embodiment, the fixing rings 121 are interference-fitted into the pressure plate mounting grooves 111, so that the fixing rings 121 are fixed in the pressure plate mounting grooves 111. Moreover, after the fixing rings 121 are connected to the toothed hub 11, no additional connecting structures are required, making the structure more compact.

The electromagnetic clutch 10 further includes auxiliary elastic return elements 5, where the auxiliary elastic return elements 5 are arranged on the toothed hub 11 and can extend and retract radially relative to the toothed hub 11, and the auxiliary elastic return elements 5 elastically abut against the inner wall surface of the sliding sleeve 2. Positioning grooves 22 are formed in the inner wall surface of the sliding sleeve 2. When the sliding sleeve 2 is located in a position where the sliding sleeve is not connected to the transmission member, that is, when the sliding sleeve 2 is in the "neutral gear" position, the auxiliary elastic return elements 5 snap into the positioning grooves 22, so that the sliding sleeve 2 is accurately located in the "neutral gear" position, thereby improving the reset accuracy and reliability of the electromagnetic clutch 10.

Referring to FIG. 1, FIG. 5, and FIG. 7, specifically, the circumferential outer surface of the toothed hub 11 is provided with spring mounting grooves 115, where the spring mounting grooves 115 are arranged in a radial direction of the toothed hub 11. The auxiliary elastic return element 5 includes a first spring 51 and a ball 52, where both the first spring 51 and the ball 52 are arranged in the spring mounting groove 115, and the ball 52 is located between the first spring 51 and the sliding sleeve 2. The ball 52 abuts against the inner wall surface of the sliding sleeve 2 under the action of an elastic force of the first spring 51. When the sliding sleeve 2 is in the "neutral gear" position, the ball 52 can snap into the positioning groove 22. When the sliding sleeve 2 moves toward the "first gear" or the "second gear", the ball 52 is moved out of the positioning groove 22.

In the above, by providing the auxiliary elastic return elements 5, when the sliding sleeve 2 is reset to the "neutral gear" position under the action of the elastic reset elements 4, the balls 52 can snap into the positioning grooves 22, so that the resistance to movement of the sliding sleeve 2 is increased, thereby stabilizing the sliding sleeve 2 in the "neutral gear" position, and improving the reset accuracy and reliability of the sliding sleeve 2. When the sliding sleeve 2 moves toward the "first gear" or the "second gear", the sliding sleeve 2, under the force of electromagnetic induction, causes the balls 52 to move out of the positioning grooves 22.

In the embodiments shown in FIG. 1 and FIG. 5, the plurality of spring mounting grooves 115 are blind holes and are distributed in the circumferential direction of the toothed hub 11, so that when the balls 52 snap into the positioning grooves 22, the sliding sleeve 2 is subjected to a more balanced force in the circumferential direction.

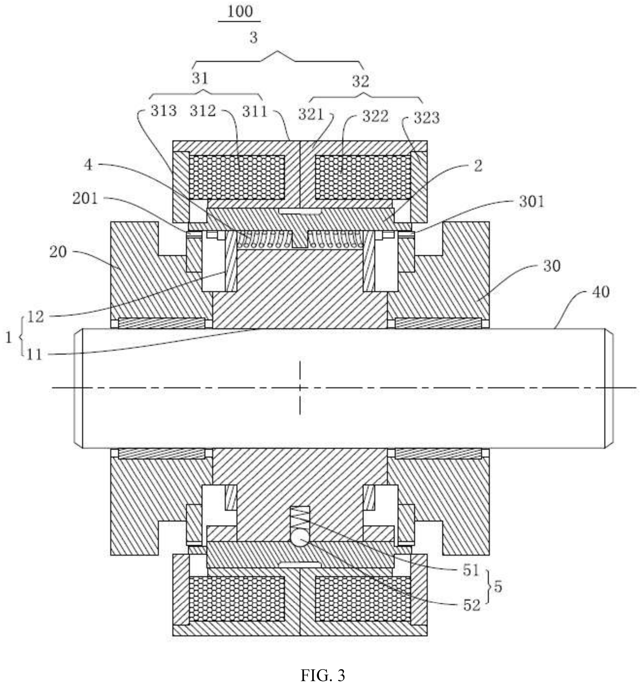

The plurality of spline grooves 114, the plurality of connecting protrusions 122, and the plurality of auxiliary elastic return elements 5 are all arranged at intervals in the circumferential direction of the toothed hub 11, and any two of the spline grooves 114, the connecting protrusions 122, or the auxiliary elastic return elements 5 are arranged in a staggered manner. For example, in the embodiment shown in FIG. 3, three sets of connecting protrusions 122 and three sets of auxiliary elastic return elements 5 are arranged in the circumferential direction of the toothed hub 11, and the connecting protrusions 122 and the auxiliary elastic return elements 5 are arranged in a staggered manner; moreover, a spline groove 114 is formed between each connecting protrusion 122 and each auxiliary elastic return element.

The spline grooves 114 are in communication with two axial end surfaces of the toothed hub 11, so that the spline grooves 114 penetrate through the surfaces at two axial ends of the toothed hub 11. Therefore, the spline grooves 114 can more conveniently fit with the spline teeth 24, and one end of the spline tooth 24 can move to an outer side of the spline groove 114 and is connected to the first transmission member 20 or the second transmission member 30.

In an embodiment, limiting strips 25 are arranged on the inner wall surface of the sliding sleeve 2, and end parts of the limiting strips 25 can abut against the first transmission member 20 and the second transmission member 30. Specifically, a length direction of the limiting strip 25 is set in the axial direction of the sliding sleeve 2, and the length of the limiting strip 25 is less than the length of the spline tooth 24. When the spline teeth 24 are connected to the first transmission member 20, the limiting strips 25 abut against a side surface of the first transmission member 20 to prevent the sliding sleeve 2 from continuing moving. Similarly, after the spline teeth 24 are connected to the second transmission member 30, when the limiting strips 25 abut against a side surface of the second transmission member 30, the sliding sleeve 2 is prevented from continuing moving. That is, a travel range for movement of the limiting strips 25 is formed between the first transmission member 20 and the second transmission member 30, thereby limiting an axial movement stroke of the sliding sleeve 2.

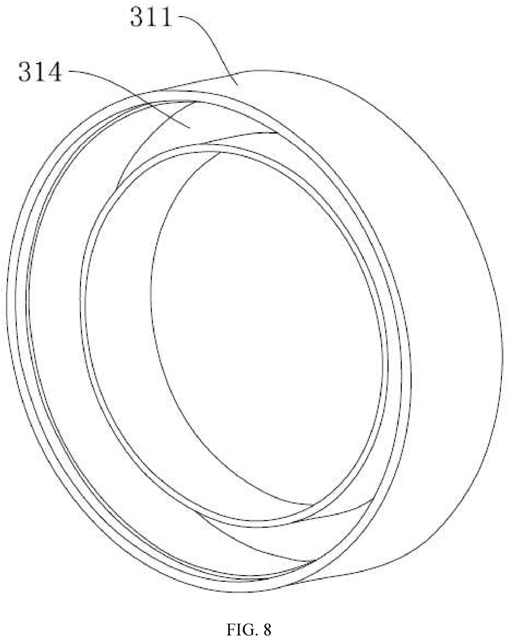

Referring to FIG. 1, FIG. 2, FIG. 3, and FIG. 8, the excitation member 3 includes a coil with a current of 2 A to 2.5 A. In this application, the current of the coil is increased to 2 A to 2.5 A for enhancing the magnetic field strength of the excitation member, thereby increasing the magnetic attraction force between the excitation member and the sliding sleeve 2, and avoiding insufficient magnetic attraction force due to magnetic leakage. In a preferred embodiment, the current of the coil is 2.2 A to 2.5 A.

The coil includes a first coil 312 and a second coil 322. The first coil 312 is arranged on the outer side of the first end of the sliding sleeve 2 and can generate electromagnetic induction with the sliding sleeve 2 to drive the sliding sleeve 2 to move in a first direction. The first direction refers to a direction in the axial direction of the sliding sleeve 2 and toward one side of the first transmission member 20. That is, when the sliding sleeve 2 moves in the first direction, the sliding sleeve 2 moves in a direction close to the first transmission member 20, so that the sliding sleeve 2 can be connected to the first transmission member 20. Similarly, the second coil 322 is arranged on the outer side of the second end of the sliding sleeve 2 and can generate electromagnetic induction with the sliding sleeve 2 to drive the sliding sleeve 2 to move in a second direction. The first direction is opposite to the second direction. That is, when the sliding sleeve 2 moves in the second direction, the sliding sleeve 2 moves in a direction close to the second transmission member 30, so that the sliding sleeve 2 can be connected to the second transmission member 30.

Detailedly, the excitation member 3 further includes a first housing 311 and a first end cover 313, where the first housing 311 is arranged on the circumferential outer side of the first end of the sliding sleeve 2, a first coil mounting groove 314 is formed in an axial end surface of the first housing 311, the first coil 312 is fixed in the first coil mounting groove 314, the first end cover 313 is fixed to the first housing 311 and abuts against the first coil 312, and the first housing 311, the first coil 312, and the first end cover 313 form a first coil assembly 31. The inner diameter of the first end cover 313 is less than the outer diameter of the first end of the sliding sleeve 2, and a first gap 315 is formed between an end part of the first end of the sliding sleeve 2 and the first end cover 313. The first gap 315 forms a movement space for the sliding sleeve 2 in the first direction, that is, a movement space for movement from the "neutral gear" to the "first gear". Moreover, after the first coil 312 is energized, the sliding sleeve 2 is attracted toward the first end cover 313 under the action of a magnetic field of the first coil assembly 31.

Similarly, the excitation member 3 further includes a second housing 321 and a second end cover 323, where the second housing 321 is arranged on the circumferential outer side of the second end of the sliding sleeve 2, a second coil mounting groove is formed in an axial end surface of the second housing 321, the second coil 322 is fixed in the second coil mounting groove, the second end cover 323 is fixed to the second housing 321 and abuts against the second coil 322, and the second housing 321, the second coil 322, and the second end cover 323 form a second coil assembly 32. The inner diameter of the second end cover 323 is less than the outer diameter of the second end of the sliding sleeve 2, and a second gap 324 is formed between an end part of the second end of the sliding sleeve 2 and the second end cover 323. The second housing 321 is fixedly connected to the first housing 311, the first end cover 313 is arranged at one end of the first housing 311 facing away from the second housing 321, and the second end cover 323 is arranged at one end of the second housing 321 facing away from the first housing 311. The second gap 324 forms a movement space for the sliding sleeve 2, that is, a movement space for movement from the "neutral gear" to the "second gear". Moreover, after the second coil 322 is energized, the sliding sleeve 2 is attracted toward the second end cover 323 under the action of a magnetic field of the second coil assembly 32.

In the above, the first coil assembly 31 and the second coil assembly 32 are provided, the sliding sleeve 2 is controlled to move to the "first gear" position when the first coil assembly 31 is energized, and the sliding sleeve 2 is controlled to move to the "second gear" position when the second coil assembly 32 is energized, so by energizing the first coil assembly 31 and the second coil assembly 32 separately, the electromagnetic clutch 10 is switched between the "first gear" and the "second gear", and the control is convenient.

In an embodiment, the first coil assembly 31 and the second coil assembly 32 have a same structure and are arranged symmetrically, making the excitation member 3 more compact in structure and convenient to manufacture.

That is, the excitation member 3 includes a housing, a coil, and an end cover, where the housing is sleeved on an outer side of the sliding sleeve 2, a coil mounting groove is formed in the housing, the coil is fixed in the coil mounting groove, the end cover is fixed to the housing and located at an axial end part of the housing, the inner diameter of the end cover is less than the outer diameter of the sliding sleeve 2, and a gap is formed between the end part of the sliding sleeve 2 and the end cover, so that when the coil is energized, the formed magnetic field can attract the sliding sleeve 2, and the sliding sleeve 2 has a movement space, thereby enabling the sliding sleeve 2 to move between the "first gear" and the "second gear".

The housing is divided in an axial direction into a first housing 311 and a second housing 321. A first coil mounting groove 314 is formed in the first housing 311. A second coil mounting groove is formed in the second housing 321. The first housing 311 and the second housing 321 are arranged back-to-back and fixed together. Both the first coil mounting groove 314 and the second coil mounting groove are annular. The coil includes a first coil 312 and a second coil 322. The first coil 312 is fixed in the first coil mounting groove 314. When the first coil 312 is energized, the sliding sleeve 2 is driven to move toward the "first gear". The second coil 322 is fixed in the second coil mounting groove. When the second coil 322 is energized, the sliding sleeve 2 is driven to move toward the "second gear". Thus, a movement direction of the sliding sleeve 2 can be conveniently controlled, that is, gear shifting can be conveniently controlled.

The end cover includes a first end cover 313 and a second end cover 323. The first end cover 313 is fixed at an end part of a first end of the housing, so that the first housing 311, the first coil 312, and the first end cover 313 form the first coil assembly 31 for driving the sliding sleeve 2 to move toward the first transmission member 20. The second end cover 323 is fixed at an end part of a second end of the housing, so that the second housing 321, the second coil 322, and the second end cover 323 form the second coil assembly 32 for driving the sliding sleeve 2 to move toward the second transmission member 30.

In other embodiments, one coil is configured, and the movement direction of the sliding sleeve 2 is changed by altering a current direction of the coil.

### Embodiment 2:

Referring to FIG. 2, the power device includes an electromagnetic clutch assembly 100. The electromagnetic clutch assembly 100 includes a connecting member 1, a sliding sleeve 2, an excitation member 3, a first transmission member 20, and a second transmission member 30. The connecting member 1, the sliding sleeve 2, the excitation member 3, the first transmission member 20, and the second transmission member 30 are coaxially arranged, and the first transmission member 20 and the second transmission member 30 are arranged on two axial sides of the sliding sleeve 2 respectively. The difference between Embodiment 2 and Embodiment 1 is that the electromagnetic clutch assembly 100 includes a first transmission member 20, a second transmission member 30, and the electromagnetic clutch 10 in Embodiment 1, that is, the first transmission member 20 and the second transmission member 30 of the power device in Embodiment 1 are part of the electromagnetic clutch assembly 100. The connections among the connecting member 1, the sliding sleeve 2, the excitation member 3, the first transmission member 20, and the second transmission member 30 are the same as in Embodiment 1, and will not be repeated herein.

Referring to FIG. 3, in Embodiment 1 and Embodiment 2 above, the electromagnetic clutch 10 further includes a main shaft 40. The main shaft 40 is fixedly connected to the connecting member 1. The first transmission member 20 and the second transmission member 30 are rotatably connected to the main shaft 40, so that relative positions among the main shaft 40, the connecting member 1, the first transmission member 20, and the second transmission member 30 are fixed, and the connecting member 1 can be connected to other power transmission structures through the main shaft 40.

It can be understood that those of ordinary skill in the art can make equivalent substitutions or changes according to the technical solutions and inventive concept of the present invention, and all such changes or substitutions shall fall within the scope of protection of the present invention.

## Claims

1. An electromagnetic clutch, **characterized by** comprising:
a connecting member;
a sliding sleeve, slidably connected to a circumferential outer side of the connecting member and axially movable relative to the connecting member, wherein two axial ends of the sliding sleeve are each provided with clamping structures, the clamping structures located at the two ends of the sliding sleeve are connectable to different transmission members respectively, and the sliding sleeve is of an integral structure; and
an excitation member, arranged on a circumferential outer side of the sliding sleeve and capable of generating electromagnetic induction with the sliding sleeve and driving the sliding sleeve to move axially, so that the sliding sleeve is connected to the different transmission members.

2. The electromagnetic clutch according to claim 1, **characterized by** further comprising:
elastic reset elements, arranged in an axial direction of the connecting member, wherein one end of each of the elastic reset elements is connected to the connecting member, and the other end of the elastic reset element is connected to the sliding sleeve to drive the sliding sleeve to disengage from the transmission members.

3. The electromagnetic clutch according to claim 2, **characterized in that**
positioning grooves are formed in an inner wall surface of the sliding sleeve; and
the electromagnetic clutch further comprises:
auxiliary elastic return elements, arranged on the connecting member and abutting against the inner wall surface of the sliding sleeve, wherein the auxiliary elastic return elements snap into the positioning grooves when the sliding sleeve is disengaged from the transmission members.

4. The electromagnetic clutch according to claim 3, **characterized in that**
the connecting member comprises a toothed hub, a circumferential outer surface of the toothed hub is provided with spring mounting grooves, and the spring mounting grooves are formed in a radial direction of the toothed hub; and
each of the auxiliary elastic return elements comprises a first spring and a ball, the first spring is arranged in each of the spring mounting grooves, the ball is located between the first spring and the sliding sleeve, and the ball abuts against the sliding sleeve.

5. The electromagnetic clutch according to claim 4, **characterized in that**
the connecting member further comprises two pressure plates fixed at two axial ends of the toothed hub respectively; and
protruding portions are arranged on the inner wall surface of the sliding sleeve and are located between the two pressure plates, and the elastic reset element is elastically connected between each of the protruding portions and each of the two pressure plates.

6. The electromagnetic clutch according to claim 5, **characterized in that**
the two axial ends of the toothed hub are each provided with a pressure plate mounting groove and clearance grooves, the diameter of the pressure plate mounting groove is smaller than the diameter of the toothed hub, one end of each of the clearance grooves is in communication with the pressure plate mounting groove, and the other end of the clearance groove is in communication with the circumferential outer surface of the toothed hub;
each of the pressure plates comprises a fixing ring and a connecting protrusion, the fixing ring is interference-fitted into the pressure plate mounting groove, one end of the connecting protrusion is connected to a circumferential outer side of the fixing ring, and the other end of the connecting protrusion passes through the clearance groove and extends to a circumferential outer side of the toothed hub; and
one end of each of the elastic reset elements away from each of the protruding portions abuts against the connecting protrusion.

7. The electromagnetic clutch according to claim 6, **characterized in that**
the circumferential outer surface of the toothed hub is provided with elastic reset element mounting grooves, the elastic reset element mounting grooves are in communication with the clearance grooves formed in the two ends of the toothed hub, and the elastic reset elements and the protruding portions are located in the elastic reset element mounting grooves;
the circumferential outer surface of the toothed hub is provided with spline grooves, a length direction of each of the spline grooves is set in an axial direction of the toothed hub, the inner wall surface of the sliding sleeve is provided with spline teeth, and the spline teeth are in sliding fit with the spline grooves;
the plurality of spline grooves, the plurality of connecting protrusions, and the plurality of auxiliary elastic return elements are all arranged at intervals in a circumferential direction of the toothed hub; and any two of the spline grooves, the connecting protrusions, or the auxiliary elastic return elements are arranged in a staggered manner.

8. The electromagnetic clutch according to claim 7, **characterized in that**
the spline grooves are in communication with two axial end surfaces of the toothed hub;
each of the clamping structures comprises a first clamping tooth and a second clamping tooth, and the first clamping tooth is arranged at a first end of the sliding sleeve and is capable of fitting with the transmission member close to the first end of the sliding sleeve; and the second clamping tooth is arranged at a second end of the sliding sleeve and is capable of fitting with the transmission member close to the second end of the sliding sleeve, and the first clamping tooth and the second clamping tooth are arranged on a same straight line as each of the spline teeth.

9. The electromagnetic clutch according to claim 1, **characterized in that** the excitation member comprises a coil with a current of 2 A to 2.5 A.

10. The electromagnetic clutch according to claim 9, **characterized in that** the current of the coil is 2.2 A to 2.5 A.

11. The electromagnetic clutch according to claim 9 or 10, **characterized in that**
the coil comprises a first coil and a second coil, the first coil is arranged on an outer side of a first end of the sliding sleeve and is capable of generating electromagnetic induction with the sliding sleeve to drive the sliding sleeve to move in a first direction, the second coil is arranged on an outer side of a second end of the sliding sleeve and is capable of generating electromagnetic induction with the sliding sleeve to drive the sliding sleeve to move in a second direction, and the first direction is opposite to the second direction.

12. The electromagnetic clutch according to claim 11, **characterized in that**
the first coil and the second coil are symmetrically arranged;
the excitation member further comprises a first housing, a first end cover, a second housing, and a second end cover, the first housing is arranged on the outer side of the first end of the sliding sleeve, a first coil mounting groove is formed in an axial end surface of the first housing, the first coil is fixed in the first coil mounting groove, the first end cover is fixed to the first housing and abuts against the first coil, the inner diameter of the first end cover is smaller than the outer diameter of the first end of the sliding sleeve, and a first gap is formed between an end part of the first end of the sliding sleeve and the first end cover;
the first housing is arranged on the outer side of the first end of the sliding sleeve, a second coil mounting groove is formed in an axial end surface of the second housing, the second coil is fixed in the second coil mounting groove, the second end cover is fixed to the second housing and abuts against the second coil, the inner diameter of the second end cover is smaller than the outer diameter of the second end of the sliding sleeve, and a second gap is formed between an end part of the second end of the sliding sleeve and the second end cover; and
the first housing is fixedly connected to the second housing, the first end cover is arranged at one end of the first housing facing away from the second housing, and the second end cover is arranged at one end of the second housing facing away from the first housing.

13. The electromagnetic clutch according to claim 1, **characterized in that** the sliding sleeve is a steel part or an iron part.

14. An electromagnetic clutch assembly, **characterized by** comprising:
the electromagnetic clutch according to any one of claims 1 to 13;
a first transmission member, arranged on one axial side of the connecting member, wherein first connecting structures are arranged on the first transmission member, and the clamping structures are capable of snapping into the first connecting structures; and
a second transmission member, arranged on one side of the connecting member away from the first transmission member, wherein second connecting structures are arranged on the second transmission member, and the clamping structures are capable of snapping into the second connecting structures.

15. The electromagnetic clutch assembly according to claim 14, **characterized in that** the first connecting structures and the second connecting structures are both clamping grooves.

16. The electromagnetic clutch assembly according to claim 14, **characterized in that** limiting strips are arranged on the inner wall surface of the sliding sleeve, an end part of a first end of each of the limiting strips is capable of abutting against the first transmission member, and an end part of a second end of the limiting strip is capable of abutting against the second transmission member.

17. The electromagnetic clutch assembly according to claim 14, **characterized by** further comprising:
a main shaft, fixedly connected to the connecting member, wherein the first transmission member and the second transmission member are both rotatably connected to the main shaft.

18. A power device, **characterized by** comprising the electromagnetic clutch assembly according to any one of claims 14 to 17, wherein the electromagnetic clutch assembly is capable of driving the sliding sleeve to be in transmission connection with the first transmission member via the clamping structures, or the electromagnetic clutch assembly is capable of driving the sliding sleeve to be in transmission connection with the second transmission member via the clamping structures, and a transmission ratio between the first transmission member and the sliding sleeve is different from a transmission ratio between the second transmission member and the sliding sleeve.

19. A vehicle, **characterized by** comprising a vehicle body, wheels, and the power device according to claim 18, wherein the power device is fixedly connected to the vehicle body, and the wheels are in transmission connection with the power device.
